# DEMANDE DE BREVET EUROPEEN

(11) **EP 1 577 847 A1**
(43) Date de publication de la demande: **21.09.2005**
(21) Numéro de dépôt: 04405160.5
(22) Date de dépôt: 17.03.2004
(51) Int. Cl.: G07F 7/08

(54) **Procédé d'authentification de produits**

(71) Demandeur: Elca Informatique S.A., 1007 Lausanne (CH)
(72) Inventeur: Gorostidi, Daniel, 1024 Ecublens (CH); Caraccia, Muriel, 1012 Lausanne (CH); Friden, Charles-Paul, 1051 Mont-sur-Lausanne (CH)
(74) Mandataire: Reuteler, Raymond Werner

(57) **Abrégé**

L'invention concerne un procédé de génération de certificats d'authentification de produits permettant à un acheteur de vérifier si un produit acheté est fabriqué par un fabricant légitime. Selon l'invention, des données identifiant un produit et un acheteur sont saisies et transmises lors d'un achat par un réseau informatique global dans un système serveur de génération de certificats d'authenticité où les données identifiant le produit sont vérifiées. Ledit serveur sélectionne de façon automatique des informations à incorporer dans un fichier d'impression du certificat d'authenticité, ces informations comprenant les données secrètes associées audit acheteur et les données identifiant de manière unique ledit produit. Le fichier d'impression d'une image du certificat d'authenticité qui est généré comprend une partie protégée contre la modification illicite du certificat incorporant au moins lesdites données identifiant de manière unique ledit produit et une partie codée comprenant les données secrètes de l'acheteur.

## Description

La présente invention concerne un procédé permettant de vérifier l'authenticité d'un produit par l'acheteur de ce produit.

Au vu des nombreuses contrefaçons de produits de marques, il serait avantageux de disposer de moyens permettant à l'acheteur de ces produits de pouvoir vérifier leur authenticité. D'autre part, pour les détenteurs de droits de propriété intellectuelle sur des produits de marques qui sont fabriqués par des fabricants agréés, il est nécessaire de pouvoir contrôler que les fabricants agréés ne mettent sur le marché que des produits authentiques et qui ont été annoncés aux détenteurs des droits.

Il n'y a aucun système convenable sur le marché qui permette à l'acheteur de vérifier l'authenticité d'un produit, c'est-à-dire fabriqué par un fabricant légitime ou agréé et mis sur le marché avec l'accord du détenteur des droits de propriété intellectuelle. Aujourd'hui, la plupart des produits de marques sont identifiables par un numéro de produit, généralement sous forme d'un code barre, permettant au fabricant d'identifier l'origine des produits. Toutefois, beaucoup de codes produits ne sont pas uniques à un seul article, et même s'ils le sont, il serait possible pour un contrefacteur de simplement copier les articles et les numéros de produits d'un exemplaire authentique, afin de mettre de multiples copies sur le marché sans que l'on puisse facilement vérifier s'il s'agit d'un produit authentique et autorisé. Dans les systèmes existants, l'acheteur ne peut pas, en règle générale, vérifier de manière simple l'authenticité du produit qu'il a acheté.

Au vu de ce qui précède, un des objectifs de l'invention est de proposer un procédé permettant à un acheteur de vérifier l'authenticité d'un produit qu'il achète: notamment, de vérifier que ce produit ne constitue pas une contrefaçon et qu'il a été mis sur le marché avec l'autorisation du fabricant légitime ou du détenteur des droits de propriété intellectuelle.

II est avantageux de proposer un procédé d'authentification de produits permettant aux détenteurs des droits de propriété intellectuelle ou aux fabricants légitimes de s'assurer que des produits mis sur le marché par un fabricant agréé sont annoncés.

De même, il est avantageux de proposer un procédé d'authentification fiable, simple à mettre en oeuvre et à utiliser par des fabricants, des distributeurs agréés et des acheteurs.

L'objectif de l'invention est atteint grâce à un procédé d'authentification d'un produit selon la revendication 1.

Dans la présente invention, le procédé d'authentification de produits comprend les étapes :
- de génération de données identifiant de manière unique et authentifiant chaque produit, et de stockage de ces données dans une base de données produits ;
- de stockage de données secrètes associées à chaque acheteur dans une base de données clients ;
- de saisie et de transmission au moyen d'un réseau informatique global tel que l'internet, lors d'un achat, de données identifiant un produit et un acheteur dans un système serveur de génération de certificats d'authenticité ;
- de vérification, dans le système serveur de génération de certificats d'authenticité, de la validité des données identifiant ledit produit ;
- de sélection automatique, dans le système serveur de génération de certificats d'authenticité, des informations à incorporer dans le fichier d'impression du certificat d'authenticité, ces informations comprenant les données secrètes associées audit acheteur et les données identifiant de manière unique ledit produit ;
- de génération d'une image du certificat d'authenticité comprenant une partie protégée contre la modification du certificat d'authenticité incorporant au moins lesdites données identifiant de manière unique ledit produit, et une partie codée comprenant les données secrètes de l'acheteur ; et
- d'envoi du fichier d'impression au site de vente du produit ou à un poste de l'acheteur.

Par les termes « protégée contre la modification » on entend protégée contre la modification ou l'utilisation des informations apparaissant sur un certificat authentique pour créer de manière illicite un faux certificat.

Les données identifiant de manière unique chaque produit comprennent de préférence un numéro d'identification de produit unique, et un code de validité associé à ce numéro d'identification généré et stocké dans le système informatique du fabricant légitime lorsque la fabrication du produit est annoncée.

Les informations incorporées dans la partie protégée contre la modification du certificat d'authenticité comprennent de préférence des données permettant l'identification du distributeur du produit en plus des données identifiant le produit.

La partie protégée de l'image du certificat d'authenticité peut avantageusement être sous forme d'une microstructure comprenant une image de fond, de préférence une représentation photographique du produit, tramée par des éléments de microstructure comprenant les données écrites identifiant le produit de manière unique. Les éléments de microstructure peuvent également comprendre des informations identifiant l'acheteur.

La partie microstructurée constitue surtout une protection contre la modification, c'est à dire contre une tentative de créer de manière illicite un certificat pour un produit B à partir d'un vrai certificat pour un produit A. La protection contre la duplication provient surtout de la partie codée comprenant une information sur l'acheteur. En effet, il ne sert à rien de dupliquer un certificat destiné à un acheteur A puisqu'on ne peut pas le fournir à un acheteur B. La duplication du certificat présente un intérêt pour le faussaire possédant des produits imités qui sont tous basés sur le même numéro de produit authentique.

La saisie de données identifiant le produit peut se faire au moyen d'une étiquette accompagnant le produit, munie d'un code barre renfermant au moins le numéro d'identification unique de produits et le code de validité associé. L'étiquette est de préférence imprimée sur du papier sécurisé au moyen d'un filigrane ou d'encre iridescente.

Dans une première forme d'exécution, la génération de la partie codée du certificat d'authenticité comprend la génération d'une structure de Moiré, la partie codée étant lisible au moyen d'un révélateur transparent complémentaire, qui est uniquement en possession de l'acheteur et dont le contenu, secret, varie d'un acheteur à l'autre. Avantageusement, les paramètres de Moiré sont uniques pour chaque certificat et sont générés et stockés dans le système informatique du fabricant légitime. Il y a essentiellement deux types de paramètres. Le premier type de paramètre, appelé fonction de transformation ci-après, définit la forme du Moiré. Il est lié au révélateur et à l'acheteur. Ce paramètre n'est pas nécessairement unique pour chaque acheteur, tant que la probabilité que deux acheteurs différents aient le même ensemble de paramètres est faible. Le deuxième type de paramètre définit le contenu du Moiré. Il s'agit par exemple d'un mot secret défini par l'acheteur. On peut également faire apparaître dans la partie codée une combinaison de ce mot secret et du numéro du produit acheté, ce qui permettrait de rendre cette information spécifique à chaque achat.

Les paramètres pour la génération du révélateur peuvent être générés à tout moment après réception des données personnelles de l'acheteur, par exemple dans le cadre d'un programme de fidélisation du client, afin de permettre l'impression et l'envoi du révélateur à l'acheteur indépendamment de l'impression du certificat. Les paramètres pour la partie codée du certificat sont de préférence générés au moment de la génération du certificat, sur la base des paramètres de Moiré utilisés pour le révélateur complémentaire.

Dans une variante, la partie codée du certificat d'authenticité peut être générée sous forme d'une structure de cryptographie visuelle, la partie codée étant lisible au moyen d'un révélateur complémentaire. De même que pour la variante précédente, les paramètres de cryptographie visuelle sont uniques pour chaque certificat et sont générés et stockés dans le système informatique du fabricant légitime. Les paramètres pour la génération du révélateur peuvent être générés à tout moment après réception des données personnelles de l'acheteur, alors que les paramètres pour la partie codée du certificat sont de préférence générés au moment de la génération du certificat, sur la base des paramètres de cryptographie utilisés pour le révélateur complémentaire.

Avantageusement, dans les deux variantes précitées un seul révélateur personnel peut être utilisé pour déchiffrer plusieurs certificats d'un acheteur de plusieurs produits, tandis qu'un certificat ne peut être déchiffré que par un seul révélateur.

Lors de la génération et du stockage de données identifiant chaque acheteur dans la base de données clients, des paramètres de génération de structures de Moiré ou de cryptographie visuelle sont générés et stockés dans la base de données, ces paramètres étant utilisés pour la génération et l'impression du révélateur transmis à l'acheteur.

Dans une autre variante, la partie codée du certificat d'authenticité peut comprendre un code correspondant à un code reproduit sur une grille imprimée transmise à l'acheteur, les données de la grille étant stockées dans la base de données clients du système informatique. Le contenu de la grille est spécifique à l'acheteur et est uniquement connu de celui-ci.

D'autres objectifs et aspects avantageux de l'invention ressortiront des revendications, de la description et des dessins annexés, dans lesquels
la Fig. 1 est un schéma illustrant les étapes générales de génération d'un certificat d'authenticité selon l'invention;
la Fig. 2 est un schéma illustrant les étapes plus spécifiques de génération d'un certificat d'authenticité selon l'invention ;
la Fig. 3a est un schéma illustrant les étapes d'allocation de numéros d'identification de produits pour la génération d'étiquettes d'identification de produits selon l'invention, utilisées lors de la génération de certificats d'authentification;
la Fig. 3b est un schéma illustrant les étapes de génération d'étiquettes d'identification de produits selon l'invention, les étiquettes indiquant un numéro d'identification de produit et un code de validité associé utilisés lors de la génération d'un certificat d'authentification;
la Fig. 4 est un schéma illustrant les étapes de création d'une base de données personnelles acheteurs selon l'invention; et
la Fig. 5 illustre une grille de contrôle utilisée par un acheteur pour vérifier la validité du certificat d'authenticité selon une deuxième forme d'exécution de l'invention.

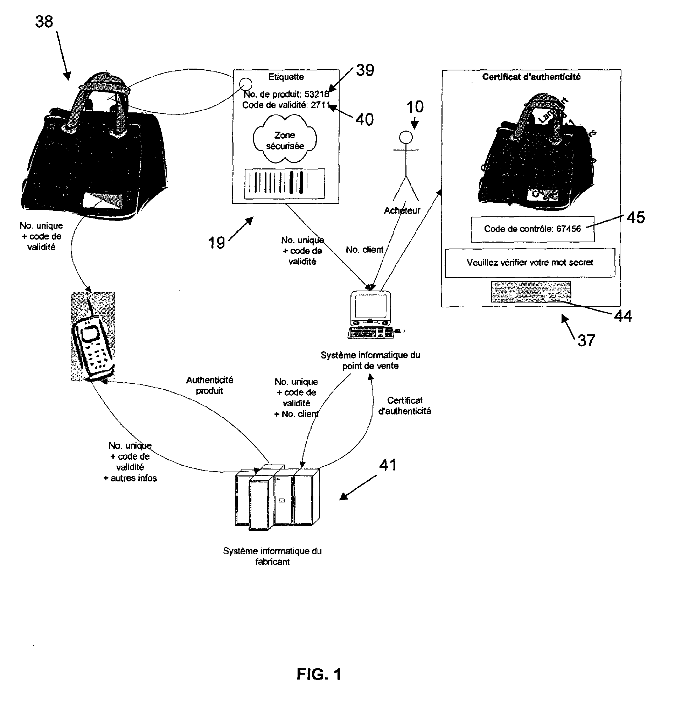

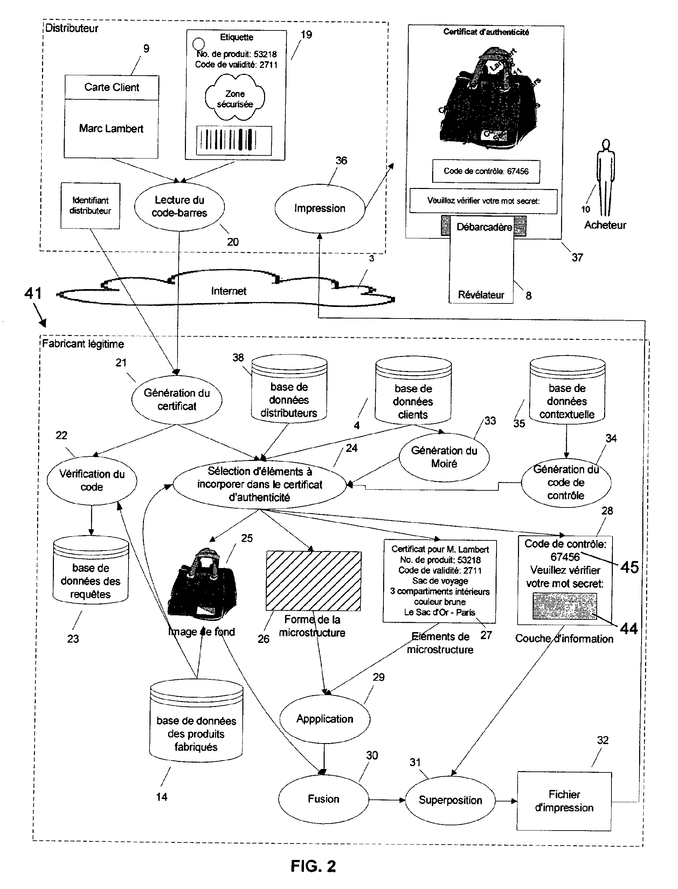

En faisant référence aux Figures, notamment les Figures 1 et 2, un acheteur 10 d'un produit 38 peut vérifier l'authenticité du produit au moyen d'un certificat d'authenticité 37 imprimable au lieu de vente du produit au moment de l'achat, ou à domicile après l'achat. Le fichier d'impression du certificat d'authenticité est généré dans un système informatique 41 agréé par, ou sous le contrôle du fabricant légitime de produits authentiques. Par fabricant légitime, on entend le détenteur des droits de propriété intellectuelle et des droits de fabrication du produit authentique. Le certificat est généré par le système informatique du fabricant à partir d'un numéro unique d'identification du produit 39, d'un code de validité 40 associé au numéro d'identification du produit, et de données concernant le client. Le système informatique 41 du fabricant légitime refuse de générer un certificat si le numéro d'identification du produit n'existe pas ou a déjà été utilisé pour la génération d'un certificat, ou si le code de validité est faux. De préférence, des données identifiant le distributeur sont également incluses dans la génération du certificat. La transmission des données précitées au système informatique du fabricant, et l'envoi du fichier d'impression du certificat au lieu de l'acheteur peuvent se faire par un réseau de communication global, tel que le réseau dit Internet 3.

Le certificat d'authenticité d'un produit authentique renferme des informations identifiant le produit et des informations codées vérifiables uniquement par l'acheteur. De préférence, le certificat contient également des informations personnelles identifiant l'acheteur. La personnalisation du certificat élimine l'intérêt de générer des copies du certificat par des contrefacteurs. Le certificat peut en outre contenir des informations sur le distributeur. Cette information fournit à l'acheteur une certaine garantie sur l'honnêteté du distributeur puisqu'elle prouve que celui-ci est connu du fabricant légitime.

Les informations identifiant le produit peuvent par exemple être une photo et une description du produit, le numéro d'identification unique du produit et le code de validité du produit. La photo du produit peut avantageusement être tramée par une microstructure selon le procédé décrit dans la demande internationale PCT/IB02/02686, la microstructure comprenant des informations sous forme de texte identifiant l'acheteur, le numéro unique du produit, et le code de validité du produit. La microstructure peut également comprendre une description du produit. Ainsi, même un certificat imprimé sur du papier non sécurisé sur une imprimante standard ne pourra pas être facilement dupliqué ou modifié par un faussaire.

Le certificat d'authenticité peut en outre comprendre un code de contrôle 45. Ce code est une fonction algorithmique complexe des autres informations présentes sur le certificat. Il permet à un petit groupe de personnes travaillant pour le fabricant légitime de vérifier l'authenticité de certificats sans avoir accès aux informations confidentielles des clients. Cette fonction algorithmique constitue une règle de sécurité qui doit uniquement être connue du groupe de personnes chargées de vérifier l'authenticité des certificats. Ce code n'est donc pas vérifié par l'acheteur.

L'information codée connue seulement de l'acheteur (et de la société qui gère un programme de fidélisation de clients) personnalise le certificat et le protège ainsi contre la copie. Elle authentifie également celui-ci car elle n'est pas connue des faussaires. A cette fin, le certificat peut contenir une zone 44 dans laquelle est imprimée une information qui est uniquement connue de l'acheteur et du programme de fidélisation, mais pas du distributeur (vendeur). Dans une première forme d'exécution, il s'agit d'un mot secret choisi par l'acheteur, par exemple lors de l'inscription au programme de fidélisation, et qui peut uniquement être lu au moyen d'un révélateur 8, détenu par l'acheteur, qui doit l'apposer sur la partie codée 44 du certificat prévue à cet effet. L'acheteur reçoit régulièrement un révélateur 8 privé (qui diffère d'un acheteur à l'autre) dans le cadre du programme de fidélisation. L'acheteur vérifie l'authenticité du certificat en apposant son révélateur sur le certificat et en vérifiant que son mot secret apparaît. Ce résultat peut avantageusement être obtenu par une utilisation particulière de l'effet de Moiré telle que décrite dans le brevet US 6,249,588, ou par cryptographie visuelle telle que décrite dans le brevet US 5,488,864..

La superposition de deux structures imprimées répétitives de périodes proches mais légèrement différentes peut faire apparaître une troisième structure répétitive de période plus élevée. L'apparition de cette troisième structure par superposition de deux autres structures est appelée phénomène de Moiré. Dans le contexte de la présente invention, cette troisième structure fait apparaître un mot secret connu uniquement de l'acheteur.

Afin de visualiser cet effet, il faut que l'une des structures soit imprimée sur un support transparent, tandis que l'autre peut être imprimée sur un support opaque. De préférence, on générera ce qu'on appelle le révélateur sur un support transparent, l'autre support étant appelé l'élément de base.

La superposition de l'élément de base et du révélateur fera uniquement apparaître le mot secret si le révélateur est utilisé avec l'élément de base approprié. L'utilisation d'un autre élément de base peut produire en revanche d'autres phénomènes de Moiré.

Dans la présente invention selon une forme d'exécution, l'information véhiculée par le Moiré comprend :
- Le code secret qui doit apparaître. Cette information en tant que telle n'est pas spécifique à l'utilisation du Moiré.
- La fonction mathématique utilisée simultanément pour la génération de l'élément de base et du révélateur. Cette fonction est appelée fonction de transformation. Il peut s'agir par exemple d'une fonction sinusoïdale.
- Les paramètres de cette fonction (p. ex. amplitude et période de la fonction sinusoïdale)

L'ensemble des fonctions mathématiques utilisables pour générer la base et le révélateur est défini par avance. Il en est de même pour l'ensemble des paramètres de chaque fonction et de l'intervalle de valeurs admissibles pour chacun de ces paramètres. Lors de l'inscription d'un client au programme de fidélisation, le système choisit aléatoirement la fonction et les paramètres associés parmi toutes les combinaisons valables, c'est-à-dire il permet la génération d'éléments de base et du révélateur. Après sélection de la fonction et de ses paramètres, le révélateur est généré, imprimé et envoyé au client.

Comme mentionné ci-dessus, à chaque produit est associé un numéro unique permettant de l'identifier. Il permet également d'identifier le fabricant agréé qui l'a produit. Le numéro d'identification du produit, qui est stocké dans une base de données du fabricant légitime, est de préférence inscrit directement sur le produit ainsi que sur une étiquette. Par « étiquette » on entend tout support matériel fourni avec le produit, tel que son emballage, sur lequel sont imprimées les informations identifiant le produit.

A chaque numéro d'identification unique stocké dans la base de données produits 14 du système informatique 41 du fabricant légitime, est associé un état dont le but est de détecter la réutilisation de numéros uniques par des faussaires. Chaque numéro peut être dans l'un des états suivants :
- valide : le produit comportant ce numéro n'a pas encore été vendu.
- invalide : le produit comportant ce numéro a été vendu, par conséquent, le numéro unique correspondant ne peut plus être utilisé.

Lorsque les produits sont fabriqués par des tiers agrées par le fabricant légitime, détenteur des droits sur les produits, ce dernier alloue en avance des intervalles de numéros à chaque fabricant agréé en fonction des volumes de production prévus. Le fabricant agrée peut uniquement utiliser les numéros à l'intérieur de l'intervalle qui lui est alloué.

Périodiquement, mais au plus tard lorsque le produit correspondant est envoyé chez un distributeur (vendeur), le fabricant agréé doit fournir au fabricant légitime la liste des numéros utilisés. Seuls les numéros fournis au fabricant légitime sont considérés comme valides. Tout produit comportant un numéro non déclaré sera considéré comme non authentique en cas de contrôle.

A chaque numéro d'identification de produit est associé un code de validité permettant de vérifier l'authenticité du numéro de produit. Ce code de validité est généré dans le système informatique du fabricant légitime selon des règles secrètes. Ainsi, ce code permet la détection de produits imités pour lesquels le faussaire a crée un numéro de produit et un code de validité. En effet, comme il ne connaît pas les règles de génération de ce code, le code qu'il aura crée pourra être identifié comme étant incorrect.

Afin de pouvoir tracer la génération et l'utilisation des codes de validité, les règles de calcul du code seront spécifiques pour chaque fabricant légitime. Si l'importateur/grossiste auquel est destiné le produit est déjà connu au moment de la fabrication du produit, les règles de calcul du code dépendront également de cette entité. Ainsi, ce code permettra d'authentifier le fabricant agréé auquel a été fourni ce code, voire le premier distributeur auquel est destiné le produit

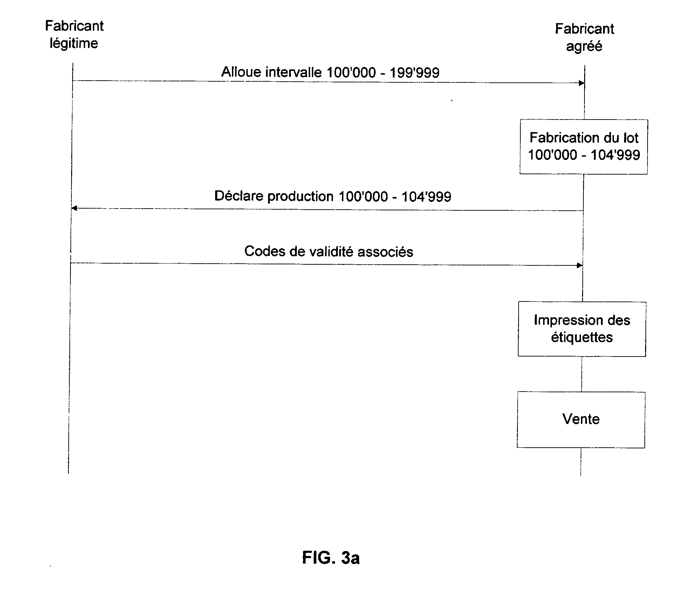

Comme illustré dans la figure 3a, le fabricant légitime alloue un intervalle de numéros de produit unique que le fabricant agréé peut utiliser pour sa production. Avant d'imprimer les étiquettes et de commercialiser sa production, le fabricant agréé doit déclarer sa production au fabricant légitime qui lui fournit en échange les codes de validité associés.

Sur le plan de la sécurité, l'étiquette est avantageusement produite sur du papier sécurisé, par exemple au moyen d'un filigrane ou d'encres iridescentes, ce qui permet par un contrôle visuel de se faire une première idée sur l'authenticité du produit. D'autre part, elle contient toutes les informations permettant un contrôle électronique.

Le moment où l'étiquette est imprimée dépend essentiellement des informations incorporées à son impression, en particulier, si son contenu varie en fonction du lieu de vente du produit correspondant.

Les informations sur l'étiquette comprennent le numéro d'identification de produit unique et le code de validité associé. Si l'information est déjà connue au moment de la fabrication du produit, l'étiquette peut également contenir le lieu de commercialisation du produit (pays ou réseau de distribution). En outre, l'étiquette contient un code-barres permettant un contrôle électronique en ligne ou hors ligne. Ce code-barres contient au minimum le numéro de produit unique et le code de validité associé.

L'acheteur qui s'est inscrit à un programme de fidélisation reçoit des informations d'identification client uniques du fabricant légitime ou de l'organisme officiel qui le représente. Ces informations sont fournies de façon indépendante d'un achat particulier, par exemple sous forme de carte client. Cette carte contient par exemple un numéro identifiant le client apparaissant sous forme de code-barres. L'information codée connue seulement de l'acheteur est soit incorporée dans la carte client, par exemple sous forme chiffrée dans le code-barres, soit stockée dans la base de données clients 4 du système informatique du fabricant légitime ou de l'organisme qui le représente. Il s'agit d'une information confidentielle qui n'est pas connue des distributeurs, et varie pour chaque client.

Un acheteur d'un produit, titulaire d'une carte client, peut demander un certificat d'authenticité personnel lors de l'achat d'un produit donné chez un distributeur agréé. Comme ce certificat combine des informations liées au produit et des informations liées à l'acheteur, ces dernières provenant de la base de données client gérée ou autorisée par le fabricant légitime, il présente les caractéristiques suivantes :
- Il ne peut pas être généré par un faussaire puisque celui-ci n'a pas accès à la base de données client. Le faussaire ne peut pas non plus copier un certificat existant puisque celui-ci est lié à un acheteur particulier.
- Il donne la garantie à l'acheteur que le distributeur auprès duquel il achète le produit est effectivement un distributeur agréé.
- Il garantit que le produit est authentique.

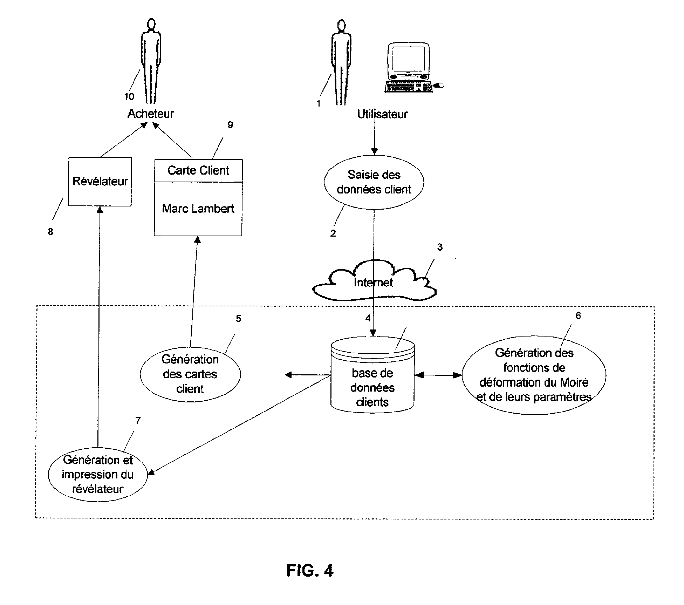

Comme l'illustre la figure 4, l'inscription d'un client dans le système informatique est effectuée soit par un utilisateur 1 de la société qui gère le programme de fidélisation des clients, soit directement par le futur acheteur 10, en se connectant à un site Web via l'Internet 3. L'utilisateur saisit les données client 2 dans une base de données 4. Ces données comprennent par exemple : des informations identifiant le client (nom, prénom, etc.), son adresse, et un code ou mot secret choisi par l'utilisateur et modifiable à tout moment par celui-ci.

Pour chaque nouveau client, le système informatique génère 6 des paramètres de génération de Moiré spécifiques, notamment la fonction mathématique de déformation du Moiré, les paramètres de cette fonction et la fréquence du Moiré. Le système garantit ainsi que ce client sera le seul à pouvoir lire, grâce à son révélateur personnel, la partie codée personnalisée du certificat qu'il a demandé lors d'un achat.

La carte client 9 est générée 5 à partir des informations contenues dans la base de données clients 4. Le révélateur 8 est généré 7 à partir des paramètres de déformation du Moiré stockés dans la base de données client 4. Le révélateur et la carte client sont imprimés puis envoyés à l'acheteur.

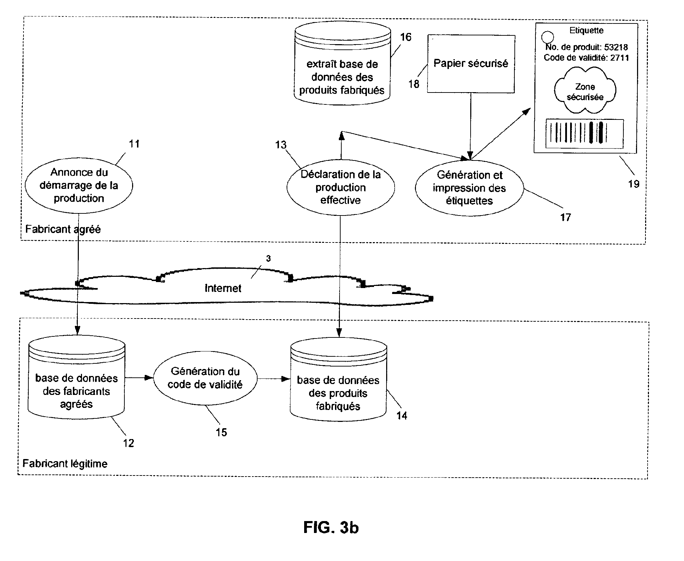

Comme l'illustrent les figures 3a et 3b, le fabricant agréé demande au fabricant légitime d'avoir un intervalle de numéros de produits qu'il pourra utiliser pour sa production 11. Le fabricant légitime alloue un tel intervalle et stocke cette information dans la base de données des fabricants agréés 12.

Afin de pouvoir imprimer les étiquettes et vendre sa production, le fabricant agréé doit déclarer sa production effective 13 pour obtenir les codes de validité associés aux numéros de produit effectivement utilisés. La génération des codes de validité 15 dépend de paramètres spécifiques au fabricant agréé. Les codes générés ainsi que les numéros de produit effectivement utilisés sont stockés dans la base de données des produits fabriqués 14. Les codes de validité sont retournés au fabricant agréé qui peut les stocker dans une base de données locale 16.

Grâce à ces codes de validité, le fabricant agréé peut générer et imprimer des étiquettes 19 sur du papier sécurisé 18, fourni de préférence par le fabricant légitime.

Comme l'illustre la figure 2, au moment de l'achat, l'acheteur 10 donne sa carte client 9 au distributeur. Celui-ci lit les code-barres 20 imprimés respectivement sur la carte client 9 et sur l'étiquette 19. Ces informations, ainsi qu'un identifiant saisi par le distributeur, sont transmis par Internet 3 au système informatique 41 du fabricant légitime qui traite la demande de génération du certificat 21. Le processus de génération commence par la vérification du numéro de produit unique et du code de validité. Cette vérification du code 22 consiste à :
- Vérifier qu'aucune demande de certificat concernant le même numéro de produit n'a été effectuée précédemment en consultant la base de données des requêtes 23.
- Vérifier que le code de validité de l'étiquette est cohérent avec le numéro de produit en consultant la base de données des produits fabriqués 14.

L'ensemble des informations comprenant
- l'identité de l'acheteur, issue de la base de données client 4,
- l'identité du distributeur issue de la base de données distributeurs 38,
- le numéro de produit et le code de validité associés et la description du produit issue de la base de données des produits fabriqués 14,
- le code de contrôle 45 généré par le processus de génération du code de contrôle 34 sur la base des informations présentes sur le certificat et des règles de génération du code stockées dans une base de données contextuelle 35, et
- la zone personnalisée générée par le processus de génération de l'élément de base du Moiré 33 sur la base des paramètres de déformation de Moiré et d'informations confidentielles client stockés dans la base de données clients 4
est utilisé pour sélectionner 24 les diverses données utilisées pour la génération de l'image du certificat, telles que la couche d'information 28, les éléments de la microstructure 27, les paramètres de déformation de cette microstructure 26, l'image de fond 25 et la partie codée (personnalisée) 44.

La définition de la microstructure et le procédé de génération de cette microstructure et de sa fusion avec l'image de fond sont en eux-mêmes connus et décrits dans la demande de brevet internationale PCT/IB02/02686 et ne seront donc pas décrits plus en détail dans la présente. Les éléments de microstructure 27 sont formés d'une combinaison unique d'éléments incorporant des informations sur le produit et l'acheteur, de sorte que la microstructure de chaque certificat émis est unique. Le fait que cette microstructure unique est fusionnée 30 avec l'image de fond, créant ainsi un fond de certificat qui est différent d'un billet à l'autre, permet d'offrir un haut niveau de sécurité contre la reproduction illicite de certificats par des fraudeurs. En particulier, le procédé de fusion 30 de la microstructure ne permet pas à un fraudeur de modifier le texte et les images de la microstructure sans détruire l'image du fond. On peut encore effectuer une transformation 29 de la microstructure définie par des paramètres de la formation de l'image 26 afin d'augmenter la difficulté de génération illicite. La transformation peut par exemple définir l'angle d'inclinaison ou la déformation optique des éléments de la microstructure.

Sur l'image avec microstructure, on superpose une couche d'information 28 comprenant le code de contrôle 45 du certificat et la partie codée personnalisée 44 générée par un algorithme de Moiré, ou un algorithme de cryptographie visuelle.

Le processus de génération du certificat fournit un fichier d'impression 32 retourné au distributeur au moyen d'internet 3. Ce fichier est ensuite imprimé par le distributeur 36 et le certificat ainsi imprimé 37 est remis à l'acheteur 10. Celui-ci contrôle l'authenticité du certificat en contrôlant la partie personnalisée au moyen de son révélateur personnel 8.

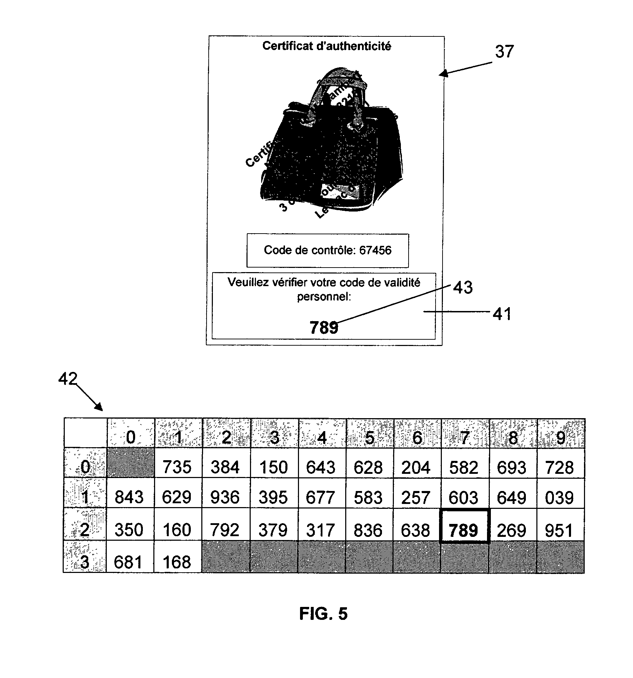

Comme l'illustre la figure 5, comme alternative à l'utilisation d'un révélateur privé exploitant le phénomène de Moiré ou la cryptographie visuelle, une personnalisation du certificat d'authenticité basée sur une carte de contrôle peut être envisagée.

Lors de l'inscription au programme de fidélisation, l'acheteur reçoit une carte de contrôle 42 contenant une grille de chiffres. Comme cette carte est confidentielle, elle doit être distincte de la carte client. Pour des raisons de sécurité, elle doit être remplacée régulièrement (p. ex. quatre fois par an). Le contenu de cette carte varie pour chaque client. Le certificat possède un code 43 dans la partie codée 44 dont la valeur dépend de cette grille de chiffres. Il peut dépendre encore d'autres informations. Par exemple, il peut dépendre du produit, du lieu de distribution et/ou de la date d'achat. Le contrôle du code de validité doit cependant rester à la portée de n'importe quel acheteur. Seul l'acheteur dispose des informations nécessaires à la vérification de ce code. Le code de validité 789 de l'exemple présenté est déduit de la grille par le jour du mois de la date d'achat, par exemple en supposant que l'achat a lieu le 27 janvier.

## Revendications

1. Procédé de génération de certificats d'authentification de produits comprenant les étapes :
- de génération de données identifiant de manière unique chaque produit et de stockage de ces données dans une base de données produits d'un système informatique d'un fabricant légitime;
- de stockage de données secrètes à chaque acheteur des produits dans une base de données clients;
- de saisie et de transmission au moyen d'un réseau informatique global tel que l'Internet, lors d'un achat, de données identifiant un produit et un acheteur dans un système serveur de génération de certificats d'authenticité ;
- de vérification, dans le système serveur de génération de certificats d'authenticité, de la validité des données identifiant ledit produit ;
- de sélection automatique, dans le système serveur de génération de certificats d'authenticité, des informations à incorporer dans le fichier d'impression du certificat d'authenticité, ces informations comprenant les données secrètes associées audit acheteur et les données identifiant de manière unique ledit produit ;
- de génération d'un fichier d'impression d'une image du certificat d'authenticité comprenant une partie protégée contre la modification illicite du certificat d'authenticité incorporant au moins lesdites données identifiant de manière unique ledit produit, et une partie codée comprenant les données secrètes de l'acheteur ; et
- de transmission du fichier d'impression au site de vente du produit ou un poste de l'acheteur.

2. Procédé selon la revendication 1, **caractérisé en ce que** les données identifiant de manière unique chaque produit comprennent un numéro d'identification de produit unique, et un code de validité associé à ce numéro d'identification qui est généré et stocké dans le système informatique du fabricant légitime lorsque la fabrication du produit est annoncée.

3. Procédé selon l'une des revendications précédentes, **caractérisé en ce que** les informations incorporées dans la partie protégée contre la duplication du certificat d'authenticité comprennent des données permettant l'identification du distributeur du produit.

4. Procédé selon l'une des revendications précédentes, **caractérisé en ce que** la partie protégée de l'image du certificat d'authenticité est une microstructure comprenant une image de fond tramé par des éléments de microstructure comprenant lesdites données identifiant ledit produit de manière unique.

5. Procédé selon la revendication précédente, **caractérisé en ce que** l'image de fond sélectionnée pour la microstructure comprend une représentation photographique du produit.

6. Procédé selon l'une des revendications précédentes, **caractérisé en ce que** la saisie de données identifiant le produit se fait au moyen d'une étiquette accompagnant le produit, munie d'un code barre renfermant au moins le numéro d'identification unique de produits et le code de validité associé.

7. Procédé selon la revendication précédente, **caractérisé en ce que** l'étiquette est imprimée sur du papier sécurisé au moyen d'un filigrane ou d'encre iridescente.

8. Procédé selon l'une des revendications précédentes, **caractérisé en ce que** la génération de la partie codée du certificat d'authenticité comprend la génération d'une structure de Moiré, la partie codée étant lisible au moyen d'un révélateur complémentaire, les paramètres de Moiré étant uniques pour chaque certificat et générés dans le système informatique du fabricant légitime au moment de la génération de certificats.

9. Procédé selon l'une des revendications 1 à 7, **caractérisé en ce que** la génération de la partie codée du certificat d'authenticité peut comprendre la génération d'une structure de cryptographie visuelle, la partie codée étant lisible au moyen d'un révélateur complémentaire, les paramètres de cryptographie visuelle étant uniques pour chaque certificat et générés dans le système informatique du fabricant légitime au moment de la génération de certificats.

10. Procédé selon l'une des revendications précédentes, **caractérisé en ce que** lors de la génération et du stockage de données identifiant chaque acheteur dans la base de données clients, des paramètres de génération de structures de Moiré ou de cryptographie visuelle sont générés et stockés dans la base de données, ces paramètres étant utilisés pour la génération et l'impression du révélateur transmis à l'acheteur.

11. Procédé selon l'une des revendications 1 à 7, **caractérisé en ce que** la partie codée du certificat d'authenticité comprend un code correspondant à un code reproduit sur une grille imprimée transmise à l'acheteur, les données de la grille étant stockées dans la base de données clients.
